# EUROPÄISCHE PATENTSCHRIFT

(11) **EP 4 448 355 B1**
(45) Veröffentlichungstag und Bekanntmachung des Hinweises auf die Patenterteilung: **15.10.2025**
(21) Anmeldenummer: 22840030.5
(22) Anmeldetag: 14.12.2022
(51) Int. Cl.: B60T 11/28, B60T 13/68, B60T 15/02, B60T 15/04, F16K 31/06

(54) **ELEKTROMAGNETISCHE AKTUATORANORDNUNG, DRUCKREGELMODUL UND FAHRZEUGBREMSSYSTEM MIT EINER ELEKTROMAGNETISCHEN AKTUATORANORDNUNG**
ELECTROMAGNETIC ACTUATOR ASSEMBLY, PRESSURE CONTROL MODULE, AND VEHICLE BRAKING SYSTEM HAVING AN ELECTROMAGNETIC ACTUATOR ASSEMBLY
ENSEMBLE ACTIONNEUR ÉLECTROMAGNÉTIQUE, MODULE DE RÉGULATION DE PRESSION ET SYSTÈME DE FREINAGE DE VÉHICULE COMPRENANT UN ENSEMBLE ACTIONNEUR ÉLECTROMAGNÉTIQUE

(30) Priorität: 15.12.2021 DE 102021133221
(43) Veröffentlichungstag der Anmeldung: 23.10.2024
(73) Patentinhaber: KNORR-BREMSE Systeme für Nutzfahrzeuge GmbH, 80809 München (DE)
(72) Erfinder: RÖTHER, Friedbert, 74389 Cleebronn (DE); WÖRNER, Ralf, 75233 Tiefenbronn (DE); JENSEN, Benjamin, 71723 Großbottwar (DE)
(86) Internationale Anmeldenummer: PCT/EP2022/085933
(87) Internationale Veröffentlichungsnummer: WO 2023/111066

(56) Entgegenhaltungen:
- EP-A1- 3 209 530
- DE-B3- 102014 115 206

## Beschreibung

Die vorliegende Erfindung betrifft eine elektromagnetische Aktuatoranordnung mit mindestens einem ersten und zweiten elektromagnetischen Aktuator, ein Druckregelmodul für ein Fahrzeugbremssystem und ein Fahrzeugbremssystem mit einer derartigen elektromagnetischen Aktuatoranordnung.

Elektromagnetische Aktuatoranordnungen, die beispielsweise eine Mehrzahl von Kippankerventilen beinhalten, finden beispielsweise Verwendung zur Druckregelung, etwa in einem Fahrzeugbremssystem und Luftaufbereitungssystem, wie beispielsweise in einem Nutzfahrzeug oder Bus zur Personenbeförderung. Beispielsweise umfasst ein Bremssystem für ein Fahrzeug mit einem elektronischen Betriebsbremssystem mehrere Magnetventile zur Druckregelung, etwa in Form von Einlass- und Auslassventilen für ein Druckregelmodul.

Eine derartige elektromagnetische Aktuatoranordnung und ein dafür konfiguriertes Kippankerventil ist zum Beispiel aus DE 10 2014 115 206 B3 bekannt, welches die Aufgabe hat, ein verbessertes Steuerventil für ein Druckregelmodul eines Fahrzeugs zu schaffen. Das Kippankerventil umfasst insbesondere ein Spulenelement mit mindestens einen Spulenkern und eine radial um den Spulenkern angeordnete Spule, einen Anker (sogenannter Kippanker), der an einer Stirnseite des Ankers mittels eines Lagers gelagert ist, wobei der Anker durch ein Aktivieren der Spule von einer ersten Position in eine zweite Position bewegbar ist, und eine Feder zum Bewegen des Ankers, die eine Kraft auf den Anker ausübt, um den Anker in Richtung der ersten Position zu bewegen. Ein Dichtelement ist an der dem Spulenelement abgewandten Seite des Ankers angeordnet. In einer Halbschale ist ein Ventilsitz mit einem Ausgang und einem Eingang für ein Fluid ausgebildet, wobei der Ausgang in der ersten Position des Ankers mittels des Dichtelements fluiddicht verschließbar ist. Dieses Patentdokument offenbart eine Elektromagnetische Aktuatoranordnung, aufweisend: mindestens einen ersten elektromagnetischen Aktuator mit einer ersten Spulenanordnung mit mindestens einem ersten Spulenkern und einer umfangsmäßig um den ersten Spulenkern angeordneten ersten Spule und mit einem bewegbaren magnetischen ersten Ankerkörper als bewegbares Aktuatorelement, der durch ein von der ersten Spulenanordnung erzeugtes Magnetfeld von einer ersten Position in eine zweite Position bewegbar ist, in der der erste Ankerkörper in Richtung einer ersten Oberfläche, die unterschiedlich zum ersten Spulenkern ist und dem ersten Ankerkörper gegenüberliegend angeordnet ist, angezogen wird und den ersten Spulenkern kontaktiert, mindestens einen zweiten elektromagnetischen Aktuator mit einer zweiten Spulenanordnung mit mindestens einem zweiten Spulenkern und einer umfangsmäßig um den zweiten Spulenkern angeordneten zweiten Spule und mit einem bewegbaren magnetischen zweiten Ankerkörper als bewegbares Aktuatorelement, der eine Dämpfungseinrichtung aufweist, die an dem zweiten Ankerkörper angebracht ist, und der durch ein von der zweiten Spulenanordnung erzeugtes Magnetfeld von einer ersten Position in eine zweite Position bewegbar ist, in der der zweite Ankerkörper in Richtung einer zweiten Oberfläche angezogen wird und an der zweiten Oberfläche mittels der zweiten Dämpfungseinrichtung anschlägt.

Es sind darüber hinaus weitere Bauarten von derartigen Magnetventilen bekannt, wie beispielsweise in DE 10 2014 115 207 A1, DE 10 2018 123 997 A1, oder DE 10 2016 105 532 A1 beschrieben. EP 3 209 530 A1 betrifft ein Kippankerventil für eine Bremse eines Fahrzeugs in verschiedenen Varianten mit zumindest einer Stelleinrichtung mit bzw. ohne Dämpferelement, einer Betätigungseinrichtung sowie einer Halteeinrichtung. Mit dem dort vorgestellten Grundprinzip kann ein Kippankerventil als ein Schließer beziehungsweise ein Ein-/Auslassventil oder alternativ als ein Öffner beispielsweise für eine Backupanwendung oder als ein Wechsler für einen universellen Einsatz realisiert werden.

Durch oftmals unterschiedliche Anforderungen in solchen Anwendungen, wie etwa unterschiedliche Einsatzbedingungen und Funktionsanforderungen an die elektromagnetischen Aktuatoren oder Ventile, ist es üblich, für unterschiedliche Konfigurationen, wie Einlass-, Auslass- oder Backup-Ventile, unterschiedliche Bauarten von Aktuatoren einzusetzen, die an die jeweiligen Anforderungen und Einsatzbedingungen angepasst sind. So wird z.B. in DE 10 2014 115 206 B3 eine Lochscheibe vorgesehen, die einen Anschlag für das Dämpferelement schafft, wenn der Anker in der zweiten Position angeordnet ist, oder in diese bewegt wird. Eine derart ausgebildete Lochscheibe bietet den Vorteil, dass ein Gleichteilekonzept einfach umgesetzt werden kann. So unterscheidet sich ein als Backup-Ventil konfiguriertes Kippankerventil im Wesentlichen durch eine andere Lochscheibe und einen zusätzlichen Anschluss. Mithilfe der Lochscheibe kann ein Kippankerventil als ein Öffner-Ventil für eine Backupanwendung oder ein Umschaltventil konfiguriert werden.

Dämpfungselemente können neben dem positiven Effekt der reduzierten Geräuschentwicklung jedoch auch negative Einflüsse auf die auf den Ankerkörper wirkende Magnetkraft haben, da dadurch oftmals der Luftspalt zwischen Ankerkörper und Spulenkern vergrößert und damit der magnetische Widerstand erhöht wird, was wiederum die Effizienz des Magnetventils verringert.

Aufgabe der vorliegenden Erfindung ist es, eine elektromagnetische Aktuatoranordnung der eingangs genannten Art anzugeben, die auch bei unterschiedlichen Funktionsanforderungen an die einzelnen elektromagnetischen Aktuatoren eine relativ hohe Effizienz der Aktuatoranordnung bei dennoch niedrigen Herstellungskosten ermöglicht.

Die Erfindung betrifft eine elektromagnetische Aktuatoranordnung der eingangs genannten Art, ein Druckregelmodul für ein Fahrzeugbremssystem und ein Fahrzeugbremssystem mit einem Druckregelmodul mit einer derartigen elektromagnetischen Aktuatoranordnung gemäß den beigefügten unabhängigen Patentansprüchen. Vorteilhafte Aus- und Weiterbildungen der Erfindung sind in den Unteransprüchen und der nachfolgenden Beschreibung angegeben.

Die vorliegende Erfindung betrifft eine elektromagnetische Aktuatoranordnung, die mindestens einen ersten elektromagnetischen Aktuator aufweist mit einer ersten Spulenanordnung mit mindestens einem ersten Spulenkern und einer umfangsmäßig um den ersten Spulenkern angeordneten ersten Spule und mit einem bewegbaren magnetischen ersten Ankerkörper als bewegbares Aktuatorelement, der durch ein von der ersten Spulenanordnung erzeugtes Magnetfeld von einer ersten Position in eine zweite Position bewegbar ist, in der der erste Ankerkörper in Richtung einer ersten Oberfläche, die unterschiedlich zum ersten Spulenkern ist und dem ersten Ankerkörper gegenüberliegend angeordnet ist, angezogen wird und den ersten Spulenkern kontaktiert, wobei der erste Ankerkörper des ersten elektromagnetischen Aktuators an der Oberfläche des ersten Spulenkerns anschlägt. Des weiteren ist mindestens ein zweiter elektromagnetischer Aktuator vorgesehen mit einer zweiten Spulenanordnung mit mindestens einem zweiten Spulenkern und einer umfangsmäßig um den zweiten Spulenkern angeordneten zweiten Spule und mit einem bewegbaren magnetischen zweiten Ankerkörper als bewegbares Aktuatorelement, der eine Dämpfungseinrichtung aufweist, die an dem zweiten Ankerkörper angebracht ist, und der durch ein von der zweiten Spulenanordnung erzeugtes Magnetfeld von einer ersten Position in eine zweite Position bewegbar ist, in der der zweite Ankerkörper in Richtung einer zweiten Oberfläche angezogen wird und an der zweiten Oberfläche mittels der Dämpfungseinrichtung anschlägt. Hierbei sind die erste Oberfläche und die zweite Oberfläche zueinander baugleich ausgebildet.

Darüber hinaus betrifft die Erfindung ein Druckregelmodul für ein Fahrzeugbremssystem mit einer derartigen elektromagnetischen Aktuatoranordnung. Darüber hinaus betrifft die Erfindung ein Fahrzeugbremssystem mit einem derartigen Druckregelmodul. Die Erfindung schafft so eine elektromagnetische Aktuatoranordnung, die auch bei unterschiedlichen Funktionsanforderungen an die einzelnen elektromagnetischen Aktuatoren eine relativ hohe Effizienz der Aktuatoranordnung bei dennoch niedrigen Herstellungskosten ermöglicht. So ist es zum Beispiel wünschenswert, bei häufig schaltenden Aktuatoren, etwa in einem Bremssystem eines Fahrzeugs in der Personenbeförderung, die oftmals störende Geräuschentwicklung der Schaltvorgänge mit einem Dämpfungselement am Ankerkörper zu reduzieren, beispielsweise wenn ein ungedämpftes Aufschlagen des Ankers vom Fahrgast eines Busses oder von Passanten aufgrund des harten und lauten Körperschalls als störend empfunden wird.

Dagegen wurde erfindungsgemäß erkannt, dass bei weniger häufig schaltenden Aktuatoren oftmals auf ein Dämpfungselement verzichtet werden kann, um den Luftspalt zwischen Ankerkörper und Spulenkern zu verkleinern und dadurch die Effizienz des Aktuators zu erhöhen. Erfindungsgemäß können beide Vorteile in einer Aktuatoranordnung, insbesondere in einem Druckregelmodul für ein Fahrzeugbremssystem, kombiniert werden, ohne dass sich aber die Anzahl von Bauteilen für Aktuatoren unterschiedlicher Funktionsanforderungen wesentlich erhöht. Denn für beide Aktuatorarten - mit bzw. ohne Dämpfungselement und mit unterschiedlicher Anschlagfäche - kann durch baugleiche erste und zweite Oberflächen, die den jeweiligen Ankerkörpern gegenüber liegen, beispielsweise ein gleiches Spulendesign verwendet werden, womit die Fertigungskosten reduziert werden können. Mit der Erfindung ist es somit möglich, dass bei unterschiedlich ausgestalteten Ankerkörpern dennoch ein gemeinsames Spulendesign benutzt werden kann, um Herstellungskosten niedrig zu halten.

Besondere Ausführungsarten der Erfindung sind in den unabhängigen Ansprüchen definiert.

Gemäß einer Ausführungsform ist die erste Oberfläche an einer ersten Komponente des ersten elektromagnetischen Aktuators und die zweite Oberfläche an einer zweiten Komponente des zweiten elektromagnetischen Aktuators ausgebildet. Hierbei sind die erste Komponente und die zweite Komponente zueinander baugleich ausgebildet. Damit kann die Anzahl unterschiedlich konfigurierter Komponenten für die jeweiligen Aktuatoren reduziert werden, was es ermöglicht, die Fertigungskosten zu verringern.

Gemäß einer Ausführungsform ist die erste Komponente wenigstens ein Teil der ersten Spulenanordnung und die zweite Komponente wenigstens ein Teil der zweiten Spulenanordnung. Beispielsweise ist die erste Komponente ein Teil oder die gesamte erste Spulenanordnung und die zweite Komponente ein Teil oder die gesamte zweite Spulenanordnung. Damit kann ein zumindest teilweise baugleiches Design der Spulenanordnung verwendet werden.

Gemäß einer Ausführungsform umfasst die erste Komponente die erste Spule und die zweite Komponente die zweite Spule. Damit kann ein wenigstens teilweise gemeinsames Spulendesign benutzt werden.

Gemäß einer Ausführungsform umfasst zusätzlich oder alternativ die erste Komponente den ersten Spulenkern und die zweite Komponente den zweiten Spulenkern. Auch damit kann ein zumindest teilweise baugleiches Design der Spulenanordnung verwendet werden.

Gemäß einer Ausführungsform ist der erste Ankerkörper mittels einer ersten Lagerungsanordnung und der zweite Ankerkörper mittels einer zweiten Lagerungsanordnung gelagert, die baugleich zur ersten Lagerungsanordnung ausgebildet ist. Damit kann auch ein gemeinsames baugleiches Lagerungskonzept verwendet werden.

Gemäß einer Ausführungsform weist Aktuatoranordnung eine weitere Anschlagkontur auf einem Spulenkörper der ersten Spulenanordnung auf, die derart konfiguriert ist, dass bei der Bewegung von der ersten Position in die zweite Position der erste Ankerkörper zuerst an dem ersten Spulenkern anschlägt und nach einer Deformation des ersten Spulenkerns und/oder des ersten Ankerkörpers die weitere Anschlagkontur zum Tragen kommt.

Gemäß einer Ausführungsform sind der erste und der zweite Ankerkörper als Plattenanker ausgebildet.

Gemäß einer Ausführungsform ist der erste elektromagnetische Aktuator als stromlos offener Aktuator, insbesondere als stromlos offenes Ventilelement, und der zweite elektromagnetische Aktuator als stromlos geschlossener Aktuator, insbesondere als stromlos geschlossenes Ventilelement, ausgebildet. Das bildet einen vorteilhaften Anwendungsbereich einer erfindungsgemäßen Aktuatoranordnung.

Gemäß einer Ausführungsform sind der erste und der zweite elektromagnetische Aktuator als elektromagnetische Ventilvorrichtung mit dem ersten bzw. zweiten Ankerkörper als jeweiliges Ventilelement ausgebildet. Insbesondere sind sie als ein jeweiliges Magnetventil ausgebildet.

Gemäß einer Ausführungsform sind der erste und der zweite elektromagnetische Aktuator als ein jeweiliges Kippankerventil ausgebildet.

Die erfindungsgemäße Aktuatoranordnung ist besonders vorteilhaft, wenn neben dem ersten und zweiten Aktuator zudem mindestens ein dritter elektromagnetischer Aktuator vorgesehen ist mit einer dritten Spulenanordnung mit mindestens einem dritten Spulenkern und einer umfangsmäßig um den dritten Spulenkern angeordneten dritten Spule und mit einem bewegbaren magnetischen dritten Ankerkörper als bewegbares Aktuatorelement, der eine weitere Dämpfungseinrichtung aufweist, die an dem dritten Ankerkörper angebracht ist, und der durch ein von der dritten Spulenanordnung erzeugtes Magnetfeld von einer ersten Position in eine zweite Position bewegbar ist, in der der dritte Ankerkörper in Richtung einer dritten Oberfläche angezogen wird und an wenigstens der dritten Oberfläche mittels der weiteren Dämpfungseinrichtung anschlägt.

Hierbei ist auch die dritte Oberfläche baugleich zur ersten und zweiten Oberfläche ausgebildet. Damit kann für die mindestens drei Aktuatoren ein mindestens teilweise gemeinsames Spulendesign verwendet werden.

Gemäß einer Ausführungsform ist der erste elektromagnetische Aktuator als ein 3/2-Magnetventil ausgeführt.

Die Erfindung wird im Folgenden anhand der in der Zeichnung dargestellten Figuren näher erläutert. Es zeigen:
- Fig. 1: eine schematische Darstellung eines Fahrzeugbremssystems mit einem Druckregelmodul und einer Aktuatoranordnung gemäß einem Ausführungsbeispiel der vorliegenden Erfindung,
- Fig. 2: schematische Querschnittsdarstellungen von mehreren elektromagnetischen Aktuatoren in Form jeweiliger beispielhafter Kippankerventile, die in einer Aktuatoranordnung gemäß einem Ausführungsbeispiel der vorliegenden Erfindung einsetzbar sind,
- Fig. 3: schematische Darstellungen der jeweiligen Ankerkörper der elektromagnetischen Aktuatoren gemäß Fig. 2 gemäß jeweiliger Ausführungsformen der vorliegenden Erfindung.

Die Bezeichnung der einzelnen Elemente als "erstes", "zweites" oder "drittes" Element soll in dieser Offenbarung zur eindeutigen Identifizierung der jeweiligen Elemente auch ohne konkrete Bezugszeichen beitragen und die Zugehörigkeit zu einem bestimmten Aktuator kennzeichnen, und ist nur als unterscheidbare Bezeichnung und nicht im Sinne einer Nummerierung, Aufzählung oder Anzahl von Elementen zu verstehen. Das bedeutet etwa, dass ein Element beispielsweise als "zweites" Element bezeichnet sein kann, ohne dass es notwendigerweise ein entsprechendes funktions- oder strukturgleiches "erstes" Element dazu geben muss.

In der folgenden Beschreibung werden für gleiche oder ähnlich wirkende Elemente gleiche oder ähnliche Bezugszeichen verwendet.

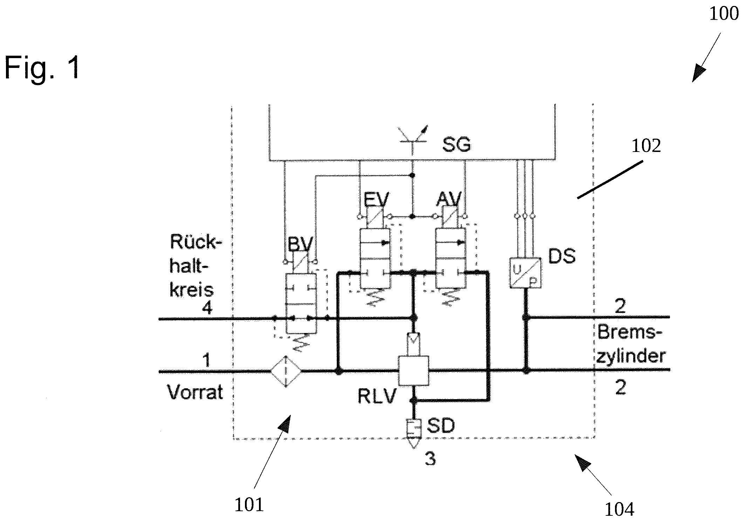

Fig. 1 zeigt eine schematische Darstellung eines Fahrzeugbremssystems 104 eines Fahrzeugs 100 mit einem Druckregelmodul 102 gemäß einem Ausführungsbeispiel der vorliegenden Erfindung. In dem Druckregelmodul 102 ist eine Ausführungsform einer erfindungsgemäßen Aktuatoranordnung 101, insbesondere mit mehreren Magnetventilen, vorgesehen. Das Druckregelmodul 102 in der dargestellten Form ist eine vorteilhafte Ausführungsform. Eine erfindungsgemäße Aktuatoranordnung 101 ist jedoch grundsätzlich auch in einer anderen Konfiguration vorteilhaft einsetzbar.

In dem gezeigten Ausführungsbeispiel der Fig. 1 handelt es sich bei dem Fahrzeug 100 beispielsweise um ein Nutzfahrzeug, z.B. einen Lastkraftwagen oder einen Bus zur Personenbeförderung. Das Druckregelmodul 102 ist Teil eines elektronischen Fahrzeugbremssystems 104 mit wenigstens einem Bremszylinder 2 und einem dem Bremszylinder 2 zugeordneten Druckregelmodul 102. Das Druckregelmodul 102 umfasst jeweils einen elektromagnetischen Aktuator als ein Einlass-Magnetventil EV, ein Auslass-Magnetventil AV sowie ein Backup-Ventil BV. Das Einlass-Magnetventil EV, das Auslass-Magnetventil AV sowie das Backup-Ventil BV bilden somit als Ausführungsformen jeweiliger elektromagnetischer Aktuatoren zusammen eine Ausführungsform einer erfindungsgemäßen Aktuatoranordnung 101.

Das Einlass-Magnetventil EV ist mit einem Vorratsluftbehälter 1 verbunden. Durch Betätigung von Einlass-Magnetventil EV oder Auslass-Magnetventil AV wird bei einer Bremsung des Fahrzeugs 100 ein von der elektronischen Bremssteuerung (schematisch dargestellt in Form der Steuervorrichtung SG) vorgegebener Druck eingeregelt. Des Weiteren ist über eine Backup-Leitung das Backup-Magnetventil BV mit einem konventionellen Backup-System 4 (auch als Rückhaltkreis bezeichnet) verbunden, in dem z.B. über ein pneumatisches Fußbremsventil beim Bremsen ein Druck anliegt. Dieser dient dazu, bei Ausfall der elektrischen Druckregelung dennoch eine Bremsung des Fahrzeugs 100 zu ermöglichen. Dazu sind das Einlass-Magnetventil EV und das Auslass-Magnetventil AV im unbestromten Zustand geschlossen (d.h. ein jeweiliges stromlos geschlossenes Ventilelement; oftmals als "normally closed" bzw. "NC" bezeichnet), das Backup-Magnetventil BV ist im unbestromten Zustand offen (d.h. ein stromlos offenes Ventilelement; oftmals als "normally open" bzw. "NO" bezeichnet).

Die elektronische Steuervorrichtung SG (etwa in Form eines oder mit einem oder mehreren Mikroprozessoren) ist z.B. in der ECU (Electronic Control Unit) des Fahrzeugs 100 vorgesehen und ist für eine jeweilige Ansteuerung und zu aktivierende Bestromung und Entstromung mit den Magnetventilen EV, AV, BV drahtgebunden oder drahtlos verbindbar. Hierbei ist die Steuervorrichtung SG derart eingerichtet, dass das Magnetventil BV an einem Beginn einer Bremsung des Fahrzeugs 100 bestromt und an einem Ende der Bremsung des Fahrzeugs 100 entstromt wird. Dagegen werden die Magnetventile EV, AV für eine von der Steuervorrichtung SG gesteuerte Druckmodifizierung während der Bremsung des Fahrzeugs 100 zwischen dem Beginn und Ende der Bremsung jeweils mehrfach bestromt und entstromt.

Damit ist für eine Belüftung das Einlass-Magnetventil EV und für eine Entlüftung das Auslass-Magnetventil AV vorgesehen. Über die elektronische Steuervorrichtung SG wird gemäß einer Ausführungsform der Druck über einen Drucksensor gemessen und entsprechend den Sollvorgaben wird der Druck über das Einlass-Magnetventil EV aufgebaut und über das Auslass-Magnetventil AV abgebaut. Die beiden Magnetventile EV, AV werden dabei durch die Druckmodifizierung häufig geschaltet, mithin häufig bestromt und entstromt. Durch das Schalten werden Körperschallgeräusche erzeugt beim Auftreffen des Ankerkörpers auf den jeweiligen Spulenkern. Um diese Geräusche zu reduzieren, ist es vorteilhaft, wenn die beiden Magnetventile über eine Dämpfungseinrichtung (etwa in Form einer Gummianschlagfläche) gedämpft werden.

Demgegenüber wird das Backup-Magnetventil BV bei Beginn einer Bremsung bestromt und am Ende einer Bremsung entstromt. Da dieses Magnetventil damit nur einmal während eines Bremsvorgangs schaltet, wurde erfindungsgemäß erkannt, dass Körperschallgeräusche meist nicht überaus störend sind und eine Gummidämpfung nicht erforderlich ist, so dass durch eine Verringerung des Luftspalts zwischen Ankerkörper und Spulenkern eine Steigerung der Magnetkraft bei gleicher Erregung ermöglicht ist.

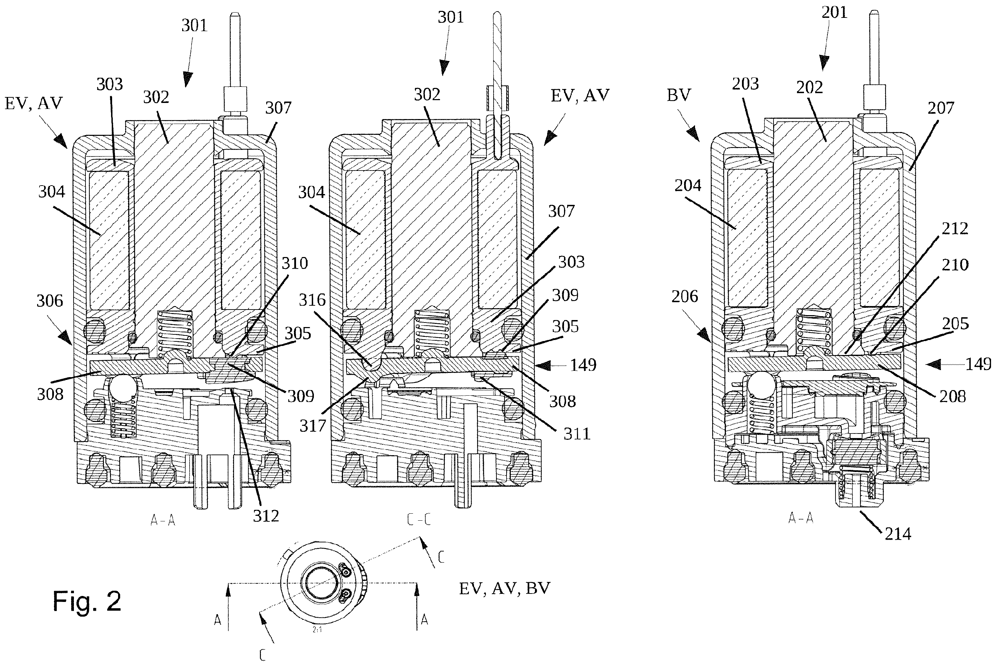

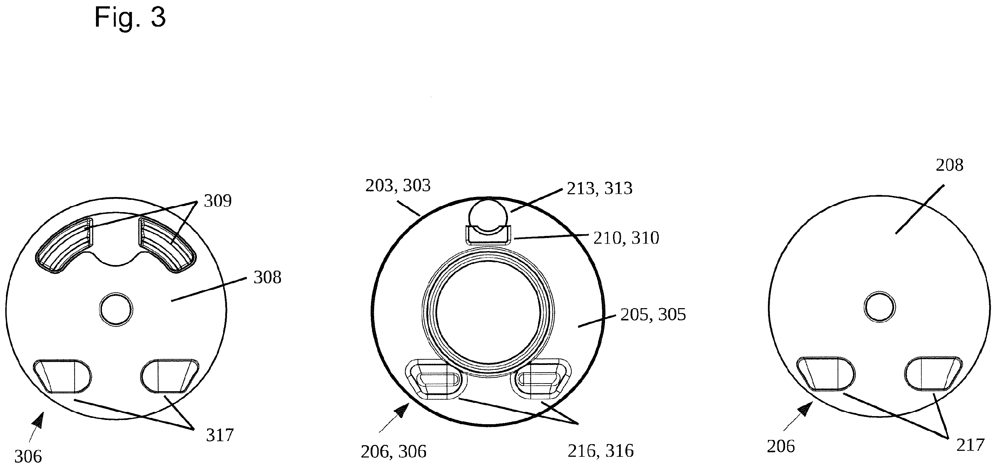

Vorteilhafte Ausführungsbeispiele von Aktuatoren, die als Einlass-Magnetventil EV bzw. Auslass-Magnetventil AV und Backup-Magnetventil BV verwendbar sind, sind in den Figuren 2 und 3 dargestellt. Fig. 2 zeigt dabei schematische Querschnittsdarstellungen der Magnetventile EV, AV, BV, die als NC-Magnetventil bzw. NO-Magnetventil konfiguriert sind, in Form jeweiliger beispielhafter Kippankerventile, die in einer Aktuatoranordnung gemäß einem Ausführungsbeispiel der vorliegenden Erfindung einsetzbar sind. Dabei sind die Magnetventile EV, AV baugleich ausgeführt und im Querschnitt durch zwei gemeinsame Schnittbilder entlang der Schnittlinie A-A bzw. C-C dargestellt. Das Magnetventil BV ist im Querschnitt nur entlang der Schnittlinie A-A dargestellt (vgl. Draufsicht der Magnetventile EV, AV, BV im unteren Teil der Fig. 2, die für alle drei Magnetventile gleich ist).

Die Fig. 3 zeigt schematische Darstellungen der jeweiligen Ankerkörper 208, 308 der Magnetventile EV, AV, BV gemäß Fig. 2 in einer Draufsicht gemäß jeweiliger Ausführungsformen der vorliegenden Erfindung. Ebenfalls ist eine Oberfläche 205, 305 des Spulenkörpers 203 bzw. 303 der Magnetventile EV, AV, BV gemäß Fig. 2 in einer Draufsicht (bei nicht montiertem Ankerkörper 208, 308, von unten) dargestellt.

Zunächst wird die Funktionsweise eines Magnetventils, hier in Form eines Kippankerventils, anhand der Magnetventile EV, AV näher beschrieben. In diesem Zusammenhang wird darauf hingewiesen, dass dem Fachmann die grundlegende Funktionsweise von elektromagnetischen Aktuatoren wie derartigen Ventilvorrichtungen mit einem durch ein Magnetfeld bewegbaren Ankerkörper als Ventilelement bekannt ist. Die erfindungsgemäße elektromagnetische Aktuatoranordnung kann im Grunde nicht nur mit Magnetventilen, sondern auch mit elektrischen Schaltvorrichtungen wie elektrischen Relais verwendet werden. Vorzugsweise wird die erfindungsgemäße elektromagnetische Aktuatoranordnung mit Magnetventilen, vorzugsweise Kippankerventilen, in einem Bremssystem eines Fahrzeugs, insbesondere eines Nutzfahrzeugs, verwendet.

Die Magnetventile EV, AV, die im vorliegenden Ausführungsbeispiel baugleich ausgeführt sind, weisen jeweils im wesentlichen ein in diesem Fall zylindrisches Gehäuse 307 (beispielsweise aus magnetischem Material) und eine Spulenanordnung 301 mit mindestens einem Spulenkern 302 und einer umfangsmäßig um den Spulenkern 302 angeordneten Spule auf. Die Spule wiederum weist einen Spulenkörper 303 (etwa aus Kunststoff) und eine Spulenwicklung 304 auf, mit der ein Magnetfeld mithilfe des Spulenkerns 302 erzeugt wird.

Fig. 2 zeigt eine Querschnittsdarstellung durch ein Magnetventil EV, AV, bei dem sich der Ankerkörper (oder kurz Anker) 308 in der zweiten angezogenen Position 149 befindet, in der der Anker 308 durch ein von der Spulenanordnung 301 erzeugtes Magnetfeld angezogen wird. Eine gegenüberliegende Stirnseite des Ankers 308 ist mittels einer Lagerungsanordnung 306 gelagert. Diese kann unterschiedlich ausgeführt sein, wie in den eingangs genannten Druckschriften verschiedentlich beschrieben. Im vorliegenden Ausführungsbeispiel weist die Lagerungsvorrichtung 306 beispielsweise annähernd halbzylindrische Lagerdome 316 am Spulenkörper 303 und entsprechende Vertiefungen 317 am Ankerkörper 308 auf. Es sind jedoch auch andere Formen der Lagerung - mit oder ohne zusätzliche Federelemente - möglich. Im vorliegenden Ausführungsbeispiel wird der Ankerkörper 308 an der Lagerung beispielsweise von einer Spiralfeder in Richtung Spulenkörper 303 gedrückt.

Der Anker 308 ist somit zwischen einer nicht gezeigten ersten Position (in der der Anker 308 von dem Spulenkörper 303 abgefallen ist) und der gezeigten zweiten, angezogenen Position 149 bewegbar. Bei bestromter Spulenwicklung 304 kann der Anker 308 in die zweite Position 149 bewegt und in dieser gehalten werden. Auf der dem Spulenkörper 303 abgewandten Seite des Ankers 308 ist ein Dichtelement 311 angeordnet, über welches in bekannter Weise nach Art eines Schaltventils eine Fluidströmung ermöglicht oder unterbrochen werden kann. Dabei ist ein Ausgang des Magnetventils mittels des Dichtelements 311 fluiddicht verschließbar, wenn der Anker 308 in der abgefallenen Position angeordnet ist (stromlos-geschlossen; NC). Die jeweilige Ventilfunktion mittels Dichtelement 311 kann aber auch in anderer Weise gestaltet sein.

An dem Anker 308 ist neben dem Dichtelement 311 wenigstens eine Dämpfungseinrichtung in Form eines oder, wie hier, mehrerer Dämpfungskörper 309 angeordnet. Das Dichtelement 311 ist auf der dem Spulenkörper 303 abgewandten Seite des Ankers 308 angeordnet. Ferner ist der oder die Dämpfungskörper 309 auf der dem Spulenkörper 303 zugewandten Seite des Ankers 308 angeordnet. Dabei sind in dem dargestellten Ausführungsbeispiel das Dichtelement 311 sowie der oder die Dämpfungskörper 309 einstückig ausgeformt. Diese können jedoch auch voneinander getrennt ausgeformt und am Anker 308 befestigt sein. Sowohl das Dichtelement 311 als auch der oder die Dämpfungskörper 309 sind in einem Ausführungsbeispiel aus einem Elastomer, wie beispielsweise Gummi, gefertigt. Der Spulenkern 302, das Gehäuse 307 und der Anker 308 weisen ein magnetisch leitendes Material auf. Wenn der Anker 308 in der zweiten Position 149 positioniert ist, so ist der Fluidausgang 312 freigegeben und das Magnetventil EV, AV auf Durchgang beziehungsweise Durchfluss geschaltet.

Wenn der Anker 308 in Richtung der Oberfläche 305 (mithin die dem Anker 308 gegenüberliegende Seite des Spulenkörpers 303) angezogen wird, wird dieser in die zweite Position 149 bewegt, in der der Anker 308 an der Oberfläche 305 mittels der Dämpfungseinrichtung 309 anschlägt. Das bedeutet, dass in der zweiten Position 149 die Dämpfungseinrichtung 309 zwischen dem Anker 308 und der Oberfläche 305 angeordnet ist. Das Dämpfungsmaterial des oder der Dämpfungskörper 309 ist vorzugsweise derart beschaffen, dass dieses bei einer Anschlagbewegung des Ankers 308 in Richtung des Spulenkörpers 303 beim Anschlag an dessen Oberfläche 305 durch Zusammendrücken der Auswölbungen elastisch verformt wird, um den Stoß abzufedern. Somit dient die Dämpfungseinrichtung in Form des oder der Dämpfungskörper 309 als elastisch verformbarer Anschlag für den Anker 308, hier in Form eines Plattenankers. Dadurch können Schwingungen des Plattenankers sowie störende Geräuschentwicklungen, insbesondere Körperschall, wie sie beispielsweise durch Stöße oder Erschütterungen oder beim schnellen Bewegen des Plattenankers in die Öffnungsposition ausgelöst werden können, unterdrückt oder verhindert werden. Es können auch andere geometrische Formen und/oder andere Materialien als Gummi einer Dämpfungseinrichtung bzw. der Dämpfungskörper verwendet werden.

Mit Bezug auf **Fig. 1** sind sowohl das Einlass-Magnetventil EV als auch das Auslass-Magnetventil AV, die während eines Bremsvorgangs häufig schalten, derartig aufgebaut. Demgegenüber ist das Magnetventil BV zwar nach einem ähnlichen Magnetanker-Prinzip aufgebaut, aber im Unterschied dazu ist es als stromlos-offenes Magnetventil ausgestaltet und weist keine Dämpfungseinrichtung auf.

**Fig. 2** zeigt ebenfalls eine Querschnittsdarstellung durch das Magnetventil BV, bei dem sich der Anker 208 auch in der zweiten angezogenen Position 149 befindet, in der der Anker 208 durch ein von der Spulenanordnung 201 erzeugtes Magnetfeld angezogen wird. Eine gegenüberliegende Stirnseite des Ankers 208 ist mittels einer Lagerungsanordnung 206 gelagert. Diese kann unterschiedlich zur Lagerungsanordnung 306 ausgeführt sein, vorteilhaft ist aber, wenn die Lagerungsanordnung 206 baugleich mit der der Magnetventile EV, AV ausgeführt ist, um ein gleiches Spulendesign verwenden zu können und um die Anzahl unterschiedlicher Komponenten oder Bauteile zu reduzieren. Entsprechend weist die Lagerungsanordnung 206 den Lagerdomen 316 entsprechende Lagerdome 216 am Spulenkörper 203 und den Vertiefungen 317 entsprechende Vertiefungen 217 am Anker 208 auf.

Auch der Anker 208 ist zwischen einer nicht gezeigten ersten Position (in der der Anker 208 von dem Spulenkörper 203 abgefallen ist) und der gezeigten zweiten, angezogenen Position 149 bewegbar. Bei bestromter Spulenwicklung 204 kann der Anker 208 in die zweite Position 149 bewegt und in dieser gehalten werden. Dabei ist ein Ausgang des Magnetventils offen, wenn der Anker 208 in der abgefallenen Position angeordnet ist (stromlos-offen; NO). Im Unterschied zu den Magnetventilen EV, AV wird der Anker 208 in Richtung der dem Anker 208 gegenüberliegend angeordneten Oberfläche 205 des Spulenkörpers 203 angezogen, schlägt aber nicht notwendigerweise an dieser Oberfläche 205 an. Zwar wird der Anker 208 in Richtung der Oberfläche 205 angezogen, kontaktiert aber den Spulenkern 202 unmittelbar, mithin an der Kontaktfläche 212 des Spulenkerns 202, die unterschiedlich zur Oberfläche 205 des Spulenkörpers 203 ist. Das hat den Vorteil, dass für den magnetischen Fluss zwischen Spulenkern 202 und Anker 208 im wesentlichen kein Luftspalt vorhanden ist, womit der magnetische Widerstand zwischen Spulenkern 202 und Anker 208 reduziert und die Effizienz des Magnetventils erhöht werden kann. Damit schlägt der Ankerkörper 208 des elektromagnetischen Aktuators BV an der Oberfläche des Spulenkerns 202 an.

Gemäß einer Ausführungsform weist die Oberfläche 205 des Magnetventils BV aber vorteilhaft dennoch wenigstens eine weitere Anschlagkontur 210 auf, die dafür konfiguriert ist, dass sie der Anker 208 zumindest im Laufe der Lebensdauer beim Anschlag in der zweiten Position 149 kontaktiert. Die Anschlagkontur 210 ist beispielsweise auf dem Spulenkörper 203 ausgebildet. Sie ist z.B. als Vorsprung ausgebildet, vorzugsweise aus Kunststoffmaterial. Dieser Vorsprung ist so positioniert, dass er bei einer etwaigen, durch häufiges direktes Aufschlagen des Ankers 208 verursachten allmählichen Abnutzung der Kontaktfläche 212 des Spulenkerns 202 (der z.B. wie der Anker 208 aus Stahl gefertigt ist) zunehmend zum Tragen kommt. Mit anderen Worten ist der Vorsprung 210 im Vergleich zur Kontaktfläche 212, wenn der Anker 208 in der zweiten Position 149 ist, zurückversetzt, so dass der Anker 208 nur an der Kontaktfläche 212 des Spulenkerns 202 anschlägt, so dass sozusagen Stahl auf Stahl trifft. Wird die Kontaktfläche 212 durch häufiges Aufschlagen und dadurch herbeigeführter Abnutzung zunehmend abgeschliffen, oder anderweitig plastisch deformiert, liegen Kontaktfläche 212 und Vorsprung 210 in der Ebene der Ankeroberfläche in der zweiten Position 149 auf einer Linie, so dass der Anker 208 dann im Laufe der Lebensdauer an den Vorsprung 210 anschlägt. Damit kann vorteilhaft eine weitere Abnutzung der Spulenkern-Kontaktfläche 212 vermieden werden, der Spulenkern 202 wird aber weiterhin direkt von dem Anker 208 kontaktiert. Damit schlägt der Anker 208 zuerst an dem Spulenkern 202 an, und nach Deformation des Spulenkerns 202 und/oder des Ankers 208 kommt die Anschlagkontur 210 auf dem Spulenkörper 203 für den Anschlag des Ankers 208 zum Tragen.

In der **Fig. 3** ist näher dargestellt, dass die Oberfläche 205, hier des Spulenkörpers 203, und die Oberfläche 305, hier des Spulenkörpers 303, die beide dem jeweiligen Anker 208, 308 gegenüberliegen, zueinander baugleich ausgebildet sind. Dies ist auch in den Schnittbildern A-A der **Fig. 2** erkennbar. Damit weist auch die Oberfläche 305 der Magnetventile EV, AV z.B. einen Vorsprung 310 (gleich geformt zur Anschlagkontur bzw. dem Vorsprung 210) auf, der jedoch in diesem Fall keine derartige Funktion hat. "Baugleich" bedeutet in diesem Zusammenhang insbesondere, dass die Oberflächen eine gleiche dreidimensionale Oberflächenstruktur und gleiche dreidimensionale Oberflächenformen aufweisen.

Insbesondere soll "baugleich" bedeuten, dass die jeweiligen baugleichen Oberflächen strukturell gleich konstruiert sind, so dass sie gleich designte dreidimensionale Oberflächenstrukturen und Oberflächenformen haben, wobei etwaige Fertigungstoleranzen hierbei nicht von Bedeutung sind. Das heißt mit anderen Worten, dass baugleiche Oberflächen zwar strukturell und formenmäßig gleiches Design aufweisen, nicht aber unbedingt identisch in ihren dreidimensionalen Formen und/oder Strukturen sein müssen, da in der praktischen Herstellung meist Fertigungstoleranzen oder andere geringfügige Abweichungen, etwa zwischen unterschiedlichen Fertigungslosen, unter gleich designten Bauteilen oder Komponenten vorkommen können.

Die Oberflächen 205 und 305 sind vorzugsweise am jeweiligen Spulenkörper ausgebildet. Sie bilden insbesondere eine dem jeweiligen Anker gegenüberliegende Oberfläche, wobei zwischen Anker und Oberfläche nur ein Luftspalt vorhanden ist (beim Anker 308 zumindest in einem Bereich, in dem kein Dämpfungselement 309 vorhanden ist). In **Fig. 3** ist der Vollständigkeit halber auch ein jeweiliger Anspritzpunkt 213, 313 dargestellt, der bei der Herstellung des jeweiligen Spulenkörpers verwendet werden kann.

Gemäß einer Ausführungsform ist die Oberfläche 205 an einer ersten Komponente, beispielsweise an dem Spulenkörper 203, des Magnetventils BV und die Oberfläche 305 an einer zweiten Komponente, beispielsweise an dem entsprechenden Spulenkörper 303, des Magnetventils EV, AV ausgebildet. Hierbei sind vorteilhaft die erste Komponente und die zweite Komponente zueinander baugleich ausgebildet. Damit kann die Anzahl unterschiedlich konfigurierter Komponenten für die jeweiligen Magnetventile reduziert werden, was es ermöglicht, die Fertigungskosten zu verringern.

Gemäß einer Ausführungsform sind die zueinander baugleichen Komponenten die oder ein jeweiliger Teil der jeweiligen Spulenanordnung. Mit anderen Worten ist die erste Komponente wenigstens ein Teil der Spulenanordnung 201 und die zweite Komponente wenigstens ein Teil der Spulenanordnung 301. Beispielsweise ist die erste Komponente ein Teil (etwa die Spule 203, 204 und/oder der Spulenkern 202) der Spulenanordnung 201 oder die gesamte Spulenanordnung 201 und die zweite Komponente entsprechend ein Teil oder die gesamte Spulenanordnung 301. Beispielsweise werden baugleiche Spulenanordnungen 201 und 301 verwendet, die baugleiche Spulenkerne 202, 302, Spulenkörper 203, 303 und Spulenwicklungen 204, 304 haben. Die bauglichen Spulenanordnungen können weniger oder auch mehr baugleiche Teile oder Komponenten aufweisen. Beispielsweise werden die baugleichen Spulenanordnungen als jeweilige vormontierte Baugruppe am jeweiligen Magnetventil verbaut. Damit kann ein zumindest teilweise baugleiches Design der jeweiligen Spulenanordnungen 201, 301 verwendet werden. Durch das gleiche Spulendesign für die drei Magnetventile kann die Stückzahl erhöht und die Anzahl der Bauteile reduziert werden. Diese Mengensteigerung der Spulenanordnung führt zu geringeren Fertigungskosten.

Insbesondere soll "baugleich" im Kontext der vorliegenden Erfindung bedeuten, dass die jeweiligen baugleichen Bauteile oder Komponenten strukturell gleich konstruiert sind (so dass sie gleich designte dreidimensionale Formen und Strukturen haben), wobei etwaige Fertigungstoleranzen hierbei nicht von Bedeutung sind. Das heißt mit anderen Worten, dass baugliche Bauteile oder Komponenten zwar strukturell und formenmäßig gleiches Design aufweisen, nicht aber unbedingt identisch in ihren dreidimensionalen Formen und/oder Strukturen sein müssen, da in der praktischen Herstellung meist Fertigungstoleranzen oder andere geringfügige Abweichungen, etwa zwischen unterschiedlichen Fertigungslosen, unter gleich designten Bauteilen oder Komponenten vorkommen können. Beispielsweise liegen baugleiche Bauteile oder Komponenten als jeweilige gleich designte vormontierte Baugruppe oder Komponente (oder Bauteil) vor.

Ein Vorteil der Erfindung liegt darin, dass für die NC-Magnetventile EV, AV und das NO-Magnetventil BV ein gemeinsames Spulenanordnungs-Design (oder kurz Spulendesign) verwendet werden kann. Die Ankeranschlagflächen werden in der jeweiligen Spulenanordnung unterschiedlich ausgebildet: beim Magnetventil EV, AV an der Oberfläche 305, d.h. der Anker schlägt auf die Kunststofffläche des Spulenkörpers über einen Gummidämpfer auf, bzw. beim Magnetventil BV am Spulenkern 202 (Kontaktfläche 212), d.h. der Anker schlägt direkt auf den Spulenkern auf.

Durch die unterschiedliche Gestaltung des Ankers ist es möglich, dass unterschiedliche Anschlagflächen bei einem Spulendesign benutzt werden können. Beim Magnetventil BV ist es vorteilhaft, dass der Anker direkt auf den Spulenkern aufschlägt. Bei bestromtem Anker entsteht durch den direkten Kontakt zum Anker kein oder ein sehr geringer Luftspalt. Dieser geringe Luftspalt ist vorteilhaft, da das Magnetventil über die gesamte Bremszeit bestromt wird und der Haltestrom nach dem Anzug abgesenkt werden sollte, um die Erwärmung zu begrenzen. Durch den kleinen Luftspalt kann der Haltestrom stark reduziert werden und die Erwärmung wird dadurch auf ein Minimum reduziert. Für andere Anwendungen kann das Magnetventil BV optional auch als 3/2 Magnetventil ausgeführt werden, bei welchem insbesondere zwei Ventilsitze vorhanden sind. Beispielsweise kann an der Bohrung 214 ein weiterer Anschluss angeschlossen werden und somit eine 3/2 Magnetventil Funktion ermöglicht werden.

Bei den Magnetventilen EV, AV ist es vorteilhaft, dass der Aufschlag über eine Dämpfungseinrichtung abgebremst wird, um Körperschallgeräusche zu reduzieren. Diese Geräusche fallen in der Fahrgastzelle eines Fahrzeugs negativ auf. Um hier eine effektive Dämpfung zu bekommen, wird die Energie vom Anker über die Dämpfungseinrichtung die Spulenanordnung eingeleitet. Das Dämpfungskörper-Design sollte so ausgewählt werden, dass der Anker durch die negative Beschleunigung nicht auf den Spulenkern aufschlägt. Ansonsten würden die Körperschallgeräusche stark zunehmen.

Durch das gleiche Spulendesign für die drei Magnetventile kann die Stückzahl erhöht und die Anzahl der Bauteile reduziert werden. Diese Mengensteigerung der Spulenanordnung führt zu geringeren Fertigungskosten. Gleichzeitig wird durch die Erfindung auch bei unterschiedlichen Funktionsanforderungen an die einzelnen Magnetventile und unterschiedlichen Magnetventil-Bauarten, wie etwa NC- oder NO-Magnetventilen, dennoch eine insgesamt relativ hohe Effizienz der Magnetventilanordnung ermöglicht, da auf Dämpfungselemente verzichtet wird, wo diese nicht benötigt werden, und damit die Effizienz erhöht werden kann.

### BEZUGSZEICHENLISTE

- EV: Einlass-Magnetventil
- AV: Auslass-Magnetventil
- BV: Backup-Ventil
- SG: Steuervorrichtung
- 1: Vorratsbehälter
- 2: Bremszylinder
- 4: Backup-System / Rückhaltekreis
- 100: Fahrzeug
- 101: Aktuatoranordnung
- 102: Druckregelmodul
- 104: Fahrzeugbremssystem
- 149: zweite Position
- 201, 301: Spulenanordnung
- 202, 302: Spulenkern
- 203, 303: Spulenkörper
- 204, 304: Spulenwicklung
- 205, 305: Oberfläche
- 206, 306: Lagerungsanordnung
- 207, 307: Gehäuse
- 208, 308: Ankerkörper
- 210, 310: Anschlagkontur/Vorsprung
- 212: Kontaktfläche
- 213, 313: Anspritzpunkt
- 214: Bohrung
- 216, 316: Lagerdome
- 217, 317: Vertiefungen
- 309: Dämpfungseinrichtung
- 311: Dichtelement
- 312: Fluidausgang

## Patentansprüche

1. Elektromagnetische Aktuatoranordnung (101), aufweisend:
mindestens einen ersten elektromagnetischen Aktuator (BV) mit einer ersten Spulenanordnung (201) mit mindestens einem ersten Spulenkern (202) und einer umfangsmäßig um den ersten Spulenkern (202) angeordneten ersten Spule (203, 204) und mit einem bewegbaren magnetischen ersten Ankerkörper (208) als bewegbares Aktuatorelement, der durch ein von der ersten Spulenanordnung (201) erzeugtes Magnetfeld von einer ersten Position in eine zweite Position (149) bewegbar ist, in der der erste Ankerkörper (208) in Richtung einer ersten Oberfläche (205), die unterschiedlich zum ersten Spulenkern (202) ist und dem ersten Ankerkörper (208) gegenüberliegend angeordnet ist, angezogen wird und den ersten Spulenkern (202) kontaktiert, wobei der erste Ankerkörper (208) des ersten elektromagnetischen Aktuators (BV) an der Oberfläche des ersten Spulenkerns (202) anschlägt,
mindestens einen zweiten elektromagnetischen Aktuator (EV, AV) mit einer zweiten Spulenanordnung (301) mit mindestens einem zweiten Spulenkern (302) und einer umfangsmäßig um den zweiten Spulenkern (302) angeordneten zweiten Spule (303, 304) und mit einem bewegbaren magnetischen zweiten Ankerkörper (308) als bewegbares Aktuatorelement, der eine Dämpfungseinrichtung (309) aufweist, die an dem zweiten Ankerkörper (308) angebracht ist, und der durch ein von der zweiten Spulenanordnung (301) erzeugtes Magnetfeld von einer ersten Position in eine zweite Position (149) bewegbar ist, in der der zweite Ankerkörper (308) in Richtung einer zweiten Oberfläche (305) angezogen wird und an der zweiten Oberfläche (305) mittels der Dämpfungseinrichtung (309) anschlägt,
wobei die erste Oberfläche (205) und die zweite Oberfläche (305) zueinander baugleich ausgebildet sind.

2. Elektromagnetische Aktuatoranordnung nach Anspruch 1, bei der die erste Oberfläche (205) an einer ersten Komponente (202, 203, 204) des ersten elektromagnetischen Aktuators (BV) und die zweite Oberfläche (305) an einer zweiten Komponente (302, 303, 304) des zweiten elektromagnetischen Aktuators (EV, AV) ausgebildet sind und die erste Komponente (202, 203, 204) und die zweite Komponente (302, 303, 304) zueinander baugleich ausgebildet sind.

3. Elektromagnetische Aktuatoranordnung nach Anspruch 2, bei der die erste Komponente (202, 203, 204) wenigstens ein Teil der ersten Spulenanordnung (201) und die zweite Komponente (302, 303, 304) wenigstens ein Teil der zweiten Spulenanordnung (301) ist, insbesondere bei der die erste Komponente (202, 203, 204) die erste Spule (203, 204) und/oder den ersten Spulenkern (202) und die zweite Komponente (302, 303, 304) die zweite Spule (303, 304) und/oder den zweiten Spulenkern (302) umfasst.

4. Elektromagnetische Aktuatoranordnung nach einem der Ansprüche 1 bis 3, bei der der erste Ankerkörper (208) mittels einer ersten Lagerungsanordnung (206) und der zweite Ankerkörper (308) mittels einer zweiten Lagerungsanordnung (306) gelagert ist, die baugleich zur ersten Lagerungsanordnung (206) ausgebildet ist.

5. Elektromagnetische Aktuatoranordnung nach einem der Ansprüche 1 bis 4, mit einer weiteren Anschlagkontur (210) auf einem Spulenkörper (203) der ersten Spulenanordnung (201), und die derart konfiguriert ist, dass bei der Bewegung von der ersten Position in die zweite Position (149) der erste Ankerkörper (208) zuerst an dem ersten Spulenkern (202) anschlägt und nach einer Deformation des ersten Spulenkerns (202) und/oder des ersten Ankerkörpers (208) die weitere Anschlagkontur (210) zum Tragen kommt.

6. Elektromagnetische Aktuatoranordnung nach einem der Ansprüche 1 bis 5, bei der der erste und der zweite Ankerkörper (208, 308) als Plattenanker ausgebildet sind.

7. Elektromagnetische Aktuatoranordnung nach einem der Ansprüche 1 bis 6, bei der der erste elektromagnetische Aktuator (BV) als stromlos offener Aktuator, insbesondere stromlos offenes Ventilelement, und der zweite elektromagnetische Aktuator (EV, AV) als stromlos geschlossener Aktuator, insbesondere stromlos geschlossenes Ventilelement, ausgebildet sind.

8. Elektromagnetische Aktuatoranordnung nach einem der Ansprüche 1 bis 7, wobei der erste und der zweite elektromagnetische Aktuator (BV, EV, AV) als elektromagnetische Ventilvorrichtung mit dem ersten bzw. zweiten Ankerkörper (208, 308) als jeweiliges Ventilelement ausgebildet sind, insbesondere als ein jeweiliges Magnetventil ausgebildet sind.

9. Elektromagnetische Aktuatoranordnung nach einem der Ansprüche 1 bis 8, wobei der erste und der zweite elektromagnetische Aktuator (BV, EV, AV) als ein jeweiliges Kippankerventil ausgebildet sind.

10. Elektromagnetische Aktuatoranordnung nach einem der Ansprüche 1 bis 9,
mit mindestens einem dritten elektromagnetischen Aktuator (EV, AV) mit einer dritten Spulenanordnung (301) mit mindestens einem dritten Spulenkern (302) und einer umfangsmäßig um den dritten Spulenkern (302) angeordneten dritten Spule (303, 304) und mit einem bewegbaren magnetischen dritten Ankerkörper (308) als bewegbares Aktuatorelement, der eine weitere Dämpfungseinrichtung (309) aufweist, die an dem dritten Ankerkörper (308) angebracht ist, und der durch ein von der dritten Spulenanordnung (301) erzeugtes Magnetfeld von einer ersten Position in eine zweite Position (149) bewegbar ist, in der der dritte Ankerkörper (308) in Richtung einer dritten Oberfläche (305) angezogen wird und an wenigstens der dritten Oberfläche (305) mittels der weiteren Dämpfungseinrichtung (309), vorzugsweise an einem Spulenkörper (303) der dritten Spulenanordnung (201) anschlägt,
wobei die dritte Oberfläche (305) baugleich zur ersten und zweiten Oberfläche (205, 305) ausgebildet ist.

11. Elektromagnetische Aktuatoranordnung nach einem der Ansprüche 1 bis 10, bei der der erste elektromagnetische Aktuator (BV) als ein 3/2-Magnetventil ausgeführt ist.

12. Druckregelmodul (102) für ein Fahrzeugbremssystem (104) mit einer elektromagnetischen Aktuatoranordnung (101) nach einem der vorhergehenden Ansprüche.

13. Druckregelmodul nach Anspruch 12, wobei die elektromagnetische Aktuatoranordnung (101) weiterhin aufweist
mindestens einen dritten elektromagnetischen Aktuator (EV, AV) mit einer dritten Spulenanordnung (301) mit mindestens einem dritten Spulenkern (302) und einer umfangsmäßig um den dritten Spulenkern (302) angeordneten dritten Spule (303, 304) und mit einem bewegbaren magnetischen dritten Ankerkörper (308) als bewegbares Aktuatorelement, der eine weitere Dämpfungseinrichtung (309) aufweist, die an dem dritten Ankerkörper (308) angebracht ist, und der durch ein von der dritten Spulenanordnung (301) erzeugtes Magnetfeld von einer ersten Position in eine zweite Position (149) bewegbar ist, in der der dritte Ankerkörper (308) in Richtung einer dritten Oberfläche (305) angezogen wird und an wenigstens der dritten Oberfläche (305) mittels der weiteren Dämpfungseinrichtung (309), vorzugsweise an einem Spulenkörper (303) der dritten Spulenanordnung (201) anschlägt, wobei die dritte Oberfläche (305) baugleich zur ersten und zweiten Oberfläche (205, 305) ausgebildet ist,
wobei der zweite elektromagnetische Aktuator (EV) als ein Einlassventil, der dritte elektromagnetische Aktuator (AV) als ein Auslassventil und der erste elektromagnetische Aktuator (BV) als ein Backup-Ventil konfiguriert sind.

14. Druckregelmodul nach Anspruch 13, das weiterhin aufweist:
eine Steuervorrichtung (SG), welche für eine jeweilige Ansteuerung und Bestromung und Entstromung mit den ersten bis dritten elektromagnetischen Aktuatoren (BV, EV, AV) verbunden ist, wobei
die Steuervorrichtung (SG) derart eingerichtet ist, dass der erste elektromagnetische Aktuator (BV) an einem Beginn einer Bremsung des Fahrzeugs (100) bestromt und an einem Ende der Bremsung des Fahrzeugs (100) entstromt wird, und der zweite elektromagnetische Aktuator (EV) und der dritte elektromagnetische Aktuator (AV) für eine Druckmodifizierung während der Bremsung des Fahrzeugs (100) zwischen dem Beginn und Ende der Bremsung jeweils mehrfach bestromt und entstromt werden.

15. Fahrzeugbremssystem (104) mit einem Druckregelmodul (102) nach einem der Ansprüche 12 bis 14.

## Claims

1. Electromagnetic actuator assembly (101), having:
at least one first electromagnetic actuator (BV) with a first coil arrangement (201) with at least one first coil core (202) and a first coil (203, 204) which is arranged circumferentially about the first coil core (202), and with a movable magnetic first armature body (208) as a movable actuator element, which is movable by a magnetic field generated by the first coil arrangement (201) from a first position to a second position (149), in which the first armature body (208) is attracted towards a first surface (205), which differs from the first coil core (202) and is arranged opposite the first armature body (208), and contacts the first coil core (202), wherein the first armature body (208) of the first electromagnetic actuator (BV) strikes the surface of the first coil core (202),
at least one second electromagnetic actuator (EV, AV), with a second coil arrangement (301) with at least one second coil core (302) and a second coil (303, 304) which is arranged circumferentially about the second coil core (302), and having a movable magnetic second armature body (308) as a movable actuator element, which has a second damping apparatus (309) which is attached to the second armature body (308) and which is movable by a magnetic field generated by the second coil arrangement (301) from a first position to a second position (149), in which the second armature body (308) is attracted towards a second surface (305) and engages with the second surface (305) by means of the second damping apparatus (309),
wherein the first surface (205) and the second surface (305) are constructed to have a mutually identical structure.

2. Electromagnetic actuator assembly according to claim 1, wherein the first surface (205) is constructed on a first component (202, 203, 204) of the first electromagnetic actuator (BV) and the second surface (305) is constructed on a second component (302, 303, 304) of the second electromagnetic actuator (EV, AV), and the first component (202, 203, 204) and the second component (302, 303, 304) are constructed with a mutually identical structure.

3. Electromagnetic actuator assembly according to claim 2, wherein the first component (202, 203, 204) is at least a part of the first coil arrangement (201) and the second component (302, 303, 304) is at least a part of the second coil arrangement (301), in particular wherein the first component (202, 203, 204) comprises the first coil (203, 204) and/or the first coil core (202) and the second component (302, 303, 304) comprises the second coil (303, 304) and/or the second coil core (302).

4. Electromagnetic actuator assembly according to any one of claims 1 to 3, wherein the first armature body (208) is mounted by means of a first bearing arrangement (206) and the second armature body (308) is mounted by means of a second bearing arrangement (306) which is constructed with an identical structure as the first bearing arrangement (206).

5. Electromagnetic actuator arrangement according to any one of claims 1 to 4, with a further stop contour (210) on a coil body (203) of the first coil arrangement (201), and which is configured such that, during movement from the first position to the second position (149), the first armature body (208) first strikes the first coil core (202) and, after deformation of the first coil core (202) and/or the first armature body (208), the further stop contour (210) comes into effect.

6. Electromagnetic actuator assembly according to any one of claims 1 to 5, wherein the first and second armature bodies (208, 308) are constructed as plate armatures.

7. Electromagnetic actuator assembly according to any one of claims 1 to 6, wherein the first electromagnetic actuator (BV) is constructed as a currentless open actuator, in particular a currentless open valve element, and the second electromagnetic actuator (EV, AV) is constructed as a currentless closed actuator, in particular a currentless closed valve element.

8. Electromagnetic actuator assembly according to any one of claims 1 to 7, wherein the first and second electromagnetic actuators (BV, EV, AV) are constructed as electromagnetic valve devices with the first and second armature bodies (208, 308) as respective valve elements, in particular as respective solenoid valves.

9. Electromagnetic actuator assembly according to any one of claims 1 to 8, wherein the first and second electromagnetic actuators (BV, EV, AV) are constructed as respective tilting armature valves.

10. Electromagnetic actuator assembly according to any one of claims 1 to 9,
with at least one third electromagnetic actuator (EV, AV) with a third coil arrangement (301) with at least one third coil core (302) and a third coil (303, 304) arranged circumferentially around the third coil core (302) and with a movable magnetic third armature body (308) as a movable actuator element, which has a further damping apparatus (309) which is attached to the third armature body (308) and which can be moved by a magnetic field generated by the third coil arrangement (301) from a first position into a second position (149) in which the third armature body (308) is attracted towards a third surface (305) and strikes at least the third surface (305) by means of the further damping apparatus (309), preferably a coil body (303) of the third coil arrangement (201),
wherein the third surface (305) is constructed to be identical in structure to the first and second surface (205, 305).

11. Electromagnetic actuator assembly according to any one of claims 1 to 10, wherein the first electromagnetic actuators (BV) is designed as a 3/2 solenoid valve.

12. Pressure control module (102) for a vehicle brake system (104) with an electromagnetic actuator arrangement (101) according to any one of the preceding claims.

13. Pressure control module according to claim 12, wherein the electromagnetic actuator arrangement (101) further has
at least one third electromagnetic actuator (EV, AV) with a third coil arrangement (301) with at least one third coil core (302) and a third coil (303, 304) arranged circumferentially around the third coil core (302) and a movable magnetic third armature body (308) as a movable actuator element, which has a further damping apparatus (309) which is attached to the third armature body (308) and which can be moved from a first position to a second position (149) by a magnetic field generated by the third coil arrangement (301) in which the third armature body (308) is attracted towards a third surface (305) and strikes at least the third surface (305) by means of the further damping apparatus (309), preferably on a coil body (303) of the third coil arrangement (201), wherein the third surface (305) is constructed to be identical in structure to the first and second surfaces (205, 305),
wherein the second electromagnetic actuator (EV) is configured as an inlet valve, the third electromagnetic actuator (AV) is configured as an outlet valve, and the first electromagnetic actuator (BV) is configured as a backup valve.

14. Pressure control module according to claim 13, which further has:
a control device (SG) which is connected to the first to third electromagnetic actuators (BV, EV, AV) for respective control and energization and de-energization, wherein
the control device (SG) is arranged such that the first electromagnetic actuator (BV) is energized at the start of braking of the vehicle (100) and de-energized at the end of braking of the vehicle (100), and the second electromagnetic actuator (EV) and the third electromagnetic actuator (AV) are each energized and de-energized multiple times for pressure modification during the braking of the vehicle (100) between the start and end of braking.

15. Vehicle brake system (104) with a pressure control module (102) according to any one of claims 12 to 14.

## Revendications

1. Ensemble actionneur (101) électromagnétique présentant :
au moins un premier actionneur (BV) électromagnétique avec un premier ensemble de bobines (201) présentant au moins un premier noyau de bobine (202) et une première bobine (203, 204) agencée sur la périphérie autour du premier noyau de bobine (202) et avec un premier corps d'ancrage (208) magnétique mobile comme élément actionneur mobile qui est mobile par un champ magnétique généré par le premier ensemble de bobines (201) d'une première position dans une seconde position (149), dans laquelle le premier corps d'ancrage (208) est attiré en direction d'une première surface (205) qui est différente du premier noyau de bobine (202) et est agencée à l'opposé du premier corps d'ancrage (208) et touche le premier noyau de bobine (202), dans lequel le premier corps d'ancrage (208) du premier actionneur (BV) électromagnétique bute contre la surface du premier noyau de bobine (202),
au moins un deuxième actionneur (EV, AV) électromagnétique avec un deuxième ensemble de bobines (301) présentant au moins un deuxième noyau de bobine (302) et une deuxième bobine (303, 304) agencée sur la périphérie autour du deuxième noyau de bobine (302) et avec un deuxième corps d'ancrage (308) magnétique mobile comme élément actionneur mobile qui présente un dispositif d'amortissement (309) qui est monté au niveau du deuxième corps d'ancrage (308), et qui est mobile par un champ magnétique généré par le deuxième ensemble de bobines (301) d'une première position dans une seconde position (149), dans laquelle le deuxième corps d'ancrage (308) est attiré en direction d'une deuxième surface (305) et bute contre la deuxième surface (305) au moyen du dispositif d'amortissement (309),
dans lequel la première surface (205) et la deuxième surface (305) sont de construction identique l'une par rapport à l'autre.

2. Ensemble actionneur électromagnétique selon la revendication 1, pour lequel la première surface (205) est formée au niveau d'un premier composant (202, 203, 204) du premier actionneur (BV) électromagnétique et la deuxième surface (305) est formée au niveau du second composant (302, 303, 304) du deuxième actionneur (EV, AV) électromagnétique et le premier composant (202, 203, 204) et le second composant (302, 303, 304) sont de construction identique l'une par rapport à l'autre.

3. Ensemble actionneur électromagnétique selon la revendication 2, pour lequel le premier composant (202, 203, 204) est au moins une partie du premier ensemble de bobines (201) et le second composant (302, 303, 304) est au moins une partie du deuxième ensemble de bobines (301), en particulier pour lequel le premier composant (202, 203, 204) comprend la première bobine (203, 204) et/ou le premier noyau de bobine (202) et le second composant (302, 303, 304) comprend la deuxième bobine (303, 304) et/ou le deuxième noyau de bobine (302).

4. Ensemble actionneur électromagnétique selon l'une quelconque des revendications 1 à 3, pour lequel le premier corps d'ancrage (208) est logé au moyen d'un premier ensemble de logement (206) et le deuxième corps d'ancrage (308) est logé au moyen d'un second ensemble de logement (306) qui est de construction identique au premier ensemble de logement (206).

5. Ensemble actionneur électromagnétique selon l'une quelconque des revendications 1 à 4, avec un autre contour de butée (210) sur un corps de bobine (203) du premier ensemble de bobines (201) et qui est configuré de telle manière que lors du déplacement de la première position dans la seconde position (149), le premier corps d'ancrage (208) bute tout d'abord contre le premier noyau de bobine (202) et vienne porter l'autre contour de butée (210) après une déformation du premier noyau de bobine (202) et/ou du premier corps d'ancrage (208).

6. Ensemble actionneur électromagnétique selon l'une quelconque des revendications 1 à 5, pour lequel le premier et le deuxième corps d'ancrage (208, 308) sont formés comme ancre à plaques.

7. Ensemble actionneur électromagnétique selon l'une quelconque des revendications 1 à 6, pour lequel le premier actionneur (BV) électromagnétique est formé comme actionneur ouvert sans courant, en particulier élément de soupape ouvert sans courant, et le deuxième actionneur (EV, AV) électromagnétique est formé comme actionneur fermé sans courant, en particulier élément de soupape fermé sans courant.

8. Ensemble actionneur électromagnétique selon l'une quelconque des revendications 1 à 7, dans lequel le premier et le deuxième actionneur (BV, EV, AV) électromagnétique sont formés comme dispositif de soupape électromagnétique avec le premier ou deuxième corps d'ancrage (208, 308) comme élément de soupape respectif, en particulier sont formés comme une soupape magnétique respective.

9. Ensemble actionneur électromagnétique selon l'une quelconque des revendications 1 à 8, dans lequel le premier et le deuxième actionneurs (BV, EV, AV) électromagnétiques sont formés comme une soupape d'ancrage à basculement respective.

10. Ensemble actionneur électromagnétique selon l'une quelconque des revendications 1 à 9,
avec au moins un troisième actionneur (EV, AV) électromagnétique avec un troisième ensemble de bobines (301) avec au moins un troisième noyau de bobine (302) et une troisième bobine (303, 304) agencée sur la périphérie autour du troisième noyau de bobine (302) et avec un troisième corps d'ancrage (308) magnétique mobile comme élément actionneur mobile qui présente un autre dispositif d'amortissement (309) qui est monté au niveau du troisième corps d'ancrage (308) et qui est mobile par un champ magnétique généré par le troisième ensemble de bobines (301) d'une première position dans une seconde position (149), dans laquelle le troisième corps d'ancrage (308) est attiré en direction d'une troisième surface (305) et bute contre au moins la troisième surface (305) au moyen de l'autre dispositif d'amortissement (309), de préférence contre un corps de bobine (303) du troisième ensemble de bobines (201),
dans lequel la troisième surface (305) est de construction identique par rapport aux première et deuxième surfaces (205, 305).

11. Ensemble actionneur électromagnétique selon l'une quelconque des revendications 1 à 10, pour lequel le premier actionneur (BV) électromagnétique est formé comme une soupape magnétique 3/2 voies.

12. Module de régulation de pression (102) pour un système de frein de véhicule (104) avec un ensemble actionneur (101) électromagnétique selon l'une quelconque des revendications précédentes.

13. Module de régulation de pression selon la revendication 12, dans lequel l'ensemble actionneur (101) électromagnétique présente en outre
au moins un troisième actionneur (EV, AV) électromagnétique avec un troisième ensemble de bobines (301) avec au moins un troisième noyau de bobine (302) et une troisième bobine (303, 304) agencée sur la périphérie autour du troisième noyau de bobine (302) et avec un troisième corps d'ancrage (308) magnétique mobile comme élément actionneur mobile qui présente un autre dispositif d'amortissement (309) qui est monté au niveau du troisième corps d'ancrage (308), et qui est mobile par un champ magnétique généré par le troisième ensemble de bobines (301) d'une première position dans une seconde position (149), dans laquelle le troisième corps d'ancrage (308) est attiré en direction d'une troisième surface (305) et bute contre au moins la troisième surface (305) au moyen de l'autre dispositif d'amortissement (309), de préférence contre un corps de bobine (303) du troisième ensemble de bobines (201), dans lequel la troisième surface (305) est de construction identique par rapport aux première et deuxième surfaces (205, 305),
dans lequel le deuxième actionneur (EV) électromagnétique est configuré comme une soupape d'entrée, le troisième actionneur (AV) électromagnétique comme une soupape de sortie et le premier actionneur (BV) électromagnétique comme une soupape de secours.

14. Module de régulation de pression selon la revendication 13 qui présente en outre :
un dispositif de commande (SG) qui est relié pour une commande et une mise sous et hors tension respectives aux premier au troisième actionneurs (BV, EV, AV) électromagnétiques, dans lequel
le dispositif de commande (SG) est conçu de telle manière que le premier actionneur (BV) électromagnétique soit mis sous tension à un début d'un freinage du véhicule (100) et soit mis hors tension à une fin du freinage du véhicule (100), et le deuxième actionneur (EV) électromagnétique et le troisième actionneur (AV) électromagnétique soient mis sous et hors tension respectivement plusieurs fois pour une modification de pression pendant le freinage du véhicule (100) entre le début et la fin du freinage.

15. Système de frein de véhicule (104) avec un module de régulation de pression (102) selon l'une quelconque des revendications 12 à 14.
